(19) Europäisches Patentamt / European Patent Office / Office européen des brevets

(11) **EP 1 895 433 A1**

(12) **DEMANDE DE BREVET EUROPEEN**

(43) Date de publication:
**05.03.2008 Bulletin 2008/10**

(51) Int Cl.:
*G06F 17/14* *(2006.01)*   *G10L 19/02* *(2006.01)*

(21) Numéro de dépôt: **07114992.6**

(22) Date de dépôt: **24.08.2007**

(84) Etats contractants désignés:
**AT BE BG CH CY CZ DE DK EE ES FI FR GB GR HU IE IS IT LI LT LU LV MC MT NL PL PT RO SE SI SK TR**
Etats d'extension désignés:
**AL BA HR MK YU**

(30) Priorité: **29.08.2006 FR 0653507**

(71) Demandeur: **France Télécom**
**75015 Paris (FR)**

(72) Inventeurs:
• **Rault, Jean-Bernard**
  **35690, ACIGNE (FR)**
• **Betser, Michaël**
  **35000, RENNES (FR)**
• **Collen, Patrice**
  **35760, MONTGERMONT (FR)**

(54) **Procédé d'estimation de phase pour la modélisation sinusoidale d'un signal numérique**

(57)    L'invention concerne un procédé d'estimation de phase d'une composante sinusoïdale d'un signal numérique (x(n)), comportant les étapes de:
- segmentation (a1) dudit signal,
- Transformée de Fourier Discrète (a2) d'une trame dudit signal, pondérée par une fenêtre d'analyse (w(n)),
- obtention (a3) d'une première estimation de phase $\left(\hat{\varphi}_p^K(n)\right)$ en utilisant l'argument d'un pic du spectre en fréquence dudit signal,
- estimation (a3) de fréquence de ladite composante sinusoïdale,
et caractérisé par les étapes supplémentaires de :
- estimation (a4) d'une valeur de biais en fonction de la différence entre la fréquence précédemment obtenue à l'étape d'estimation et la fréquence discrète dudit pic, et en fonction de la variation de fréquence estimée $(\Delta \tilde{f}_K)$ sur ladite fenêtre d'analyse (w(n)),
- correction (a4) de ladite première estimation de phase par ladite valeur de biais.

Fig. 1

**Description**

La présente invention se situe de manière générale dans le domaine du traitement du signal, et plus précisément dans le domaine de l'analyse, de la compression et de l'indexation des signaux.

L'invention concerne l'estimation de phase d'une composante sinusoïdale d'un signal numérique, basée sur l'analyse de la transformée de Fourier à court terme de ce signal.

En modélisation sinusoïdale des signaux audionumériques, on représente un signal sonore par un ensemble d'oscillateurs dont les paramètres d'amplitude et de fréquence varient lentement au cours du temps. Grâce à une analyse à court terme du signal dans les domaines temporels et fréquentiels, on détermine les valeurs de ces paramètres. Cette analyse est communément effectuée par une transformée de Fourier discrète à court terme du signal, c'est-à-dire calculée sur un nombre fini d'échantillons du signal. Les pics du spectre en fréquence obtenu sont isolés, afin d'attribuer à chaque composante sinusoïdale correspondante, les valeurs d'amplitude, de fréquence et de phase associées.

En ce qui concerne l'estimation de la phase d'un pic du spectre en fréquence du signal, la méthode la plus simple et la plus utilisée consiste à calculer son argument.

Cette méthode fonctionne correctement pour les composantes sinusoïdales stationnaires en fréquence, c'est-à-dire pour les composantes dont la fréquence est constante pendant toute la durée d'une fenêtre d'analyse. En revanche, pour une composante de fréquence variable pendant cette durée, la phase estimée présente un biais. Pour des variations de fréquence marquées par rapport à la fenêtre d'analyse, le biais obtenu dans l'estimation de la phase d'un pic est potentiellement important, entraînant une modélisation approximative du signal à analyser. Cette modélisation approximative est nuisible, par exemple dans un procédé de re-synthèse du signal, le signal re-synthétisé à partir de cette modélisation présente une mauvaise qualité auditive, s'il s'agit d'un signal sonore.

Une précédente demande de brevet FR0553891 déposée par les demandeurs propose une solution pour compenser le biais obtenu dans une première estimation de phase d'un pic par la méthode précitée de calcul de l'argument du pic. Cette solution consiste à corriger la première estimation de phase, par un polynôme de degré au moins un en variation de fréquence estimée sur la fenêtre d'analyse du signât à analyser. Plusieurs modes de réalisation de cette solution sont possibles:

- Le premier mode utilise uniquement une Transformée de Fourier Discrète (TFD) du signal. Cependant les fréquences du spectre issu de la TFD ne correspondent pas aux vraies fréquences des composantes sinusoïdales du signal. Ceci a pour conséquence que l'estimation de phase corrigée par ce premier mode de réalisation présente parfois encore un biais sensible. Cette estimation des phases des composantes sinusoïdales du signal est donc sous-optimale, ce qui entraîne une modélisation perfectible du signal.
- Les autres modes utilisent une Transformée de Fourier à Temps Discret (TFTD), ce qui conduit à une estimation de phase corrigée permettant d'avoir une bonne modélisation du signal à analyser. Néanmoins dans ces autres modes, il est nécessaire d'appliquer une TFTD par composante sinusoïdale du signal, ce qui nécessite un temps de calcul plus important que dans le premier mode de réalisation. Or le temps de calcul est un facteur essentiel qui peut être préjudiciable dans certaines applications en temps réel, par exemple pour du codage audionumérique de type "sinusoïdal plus bruit".

La présente invention a pour but d'améliorer la technique antérieure en fournissant un procédé et un dispositif d'estimation améliorée de la phase d'une composante sinusoïdale d'un signal numérique non stationnaire. Dans ce procédé et ce dispositif, on corrige la première estimation de phase obtenue par la méthode de calcul de l'argument du pic, par une valeur de biais tenant compte de l'écart de fréquence entre la fréquence estimée de la composante sinusoïdale et la fréquence discrète du spectre de Fourier correspondante. Le procédé selon l'invention a été testé en calculant cette valeur de biais à partir d'une grille de valeurs prédéterminées, cette grille ayant été construite par avance pour une fenêtre d'analyse donnée et une fréquence d'échantillonnage donnée. Les résultats obtenus montrent une nette amélioration de l'estimation de phase par rapport aux techniques existantes utilisant uniquement la Transformée de Fourier Discrète.

A cette fin, l'invention propose un procédé d'estimation de phase d'une composante sinusoïdale d'un signal numérique non stationnaire, comportant les étapes de:

- segmentation dudit signal en trames temporelles,
- Transformée de Fourier Discrète d'une desdites trames, pondérée par une fenêtre d'analyse afin d'obtenir une valeur d'un pic du spectre en fréquence dudit signal correspondant à ladite composante sinusoïdale,
- estimation de fréquence sur ladite trame de ladite composante sinusoïdale,
- première estimation de phase de ladite composante sinusoïdale en utilisant l'argument de ladite valeur de pic ainsi obtenue,

caractérisé en ce qu'il comprend les étapes supplémentaires de :

- estimation d'une valeur de biais en fonction de la différence de fréquence entre la fréquence précédemment obtenue à l'étape d'estimation et la fréquence discrète dudit pic, et en fonction d'une variation de fréquence estimée de ladite composante sinusoïdale entre le début et la fin de ladite fenêtre d'analyse,
- correction de ladite première estimation de phase par ladite valeur de biais.

Ce procédé permet d'obtenir une estimation de phase plus précise par rapport aux techniques connues utilisant uniquement la TFD comme moyen d'analyse spectrale, et plus rapide par rapport aux autres techniques, utilisant par exemple la TFTD. L'amélioration de la précision est d'autant plus notable que le signal est bruité. Par rapport aux applications nécessitant une analyse de signal rapide et n'utilisant que la TFD, les applications utilisant le procédé selon ''invention se trouvent améliorées. Ainsi:

- Une application de suivi de partiel utilisant l'invention est améliorée car le contrôle du verrouillage de la phase entre deux analyses consécutives est meilleur,
- Une application de re-synthèse d'un signal audionumérique à partir de ses partiels utilisant l'invention présente une qualité auditive améliorée car le signal re-synthétisé est plus proche de l'original,
- Dans une application de codage de signaux en signaux transitoires, sinusoïdaux et bruités utilisant l'invention, une meilleure estimation de la phase des partiels conduit à une meilleure estimation du signal résiduel, ou de bruit, par soustraction du signal original et des composantes sinusoïdales estimées. Cela conduit à un signal résiduel de variance plus faible donc perceptivement plus facile à coder.

Selon une caractéristique préférée, l'étape d'estimation d'une valeur de biais utilise une grille de valeurs prédéterminées comprenant, pour des valeurs de différences de fréquences et de variations de fréquence prédéterminées, des valeurs de biais

$$B(\delta[u], \Delta[v]) = -\arctan\left[\frac{\sum_{n=-\frac{N}{2}+1}^{\frac{N}{2}-1} w(n+\frac{N}{2})\sin\left(2\pi\left(\delta[u]+\frac{\Delta[v]}{2}nT_e\right)nT_e\right)}{\sum_{n=-\frac{N}{2}+1}^{\frac{N}{2}-1} w(n+\frac{N}{2})\cos\left(2\pi\left(\delta[u]+\frac{\Delta[v]}{2}nT_e\right)nT_e\right)}\right]$$

où
$B(\delta[u],\Delta[v])$ est une valeur de biais de la grille de valeurs prédéterminées,
$\delta[u]$ est une valeur de différence de fréquences prédéterminée,
$\Delta[v]$ est une valeur de variation de fréquence prédéterminée,
n est l'indice d'échantillonnage de la trame,
N est la longueur de la trame,
$T_e$ est la période d'échantillonnage du signal,
et w(n) est la valeur de la fenêtre d'analyse à l'échantillon n.

La grille utilisée pour calculer le biais par rapport à la première estimation de phase contient ainsi des valeurs très proches des valeurs théoriques de biais, pour une différence de fréquence prédéterminée entre la fréquence d'une composante sinusoïdale d'un signal et la fréquence correspondante dans le spectre de la TFD de ce signal, et pour une variation de fréquence prédéterminée dans la fenêtre d'analyse du signal. Une telle grille prend un temps de calcul important à remplir mais n'est remplie qu'une seule fois, pour une fenêtre d'analyse donnée et une fréquence d'échantillonnage donnée.

Selon une caractéristique préférée, dans l'étape d'estimation d'une valeur de biais, ladite valeur de biais est obtenue par interpolation de valeurs prédéterminées de ladite grille.

La valeur de biais obtenue à l'issue de l'étape d'estimation d'une valeur de biais est ainsi très proche de sa valeur théorique, ce qui donne une estimation de phase corrigée très précise.

L'invention concerne aussi un procédé de modélisation harmonique d'un signal numérique non stationnaire, utilisant le procédé d'estimation de phase selon l'invention.

L'invention concerne également un dispositif d'estimation de phase d'une composante sinusoïdale d'un signal numérique non stationnaire, caractérisé en ce qu'il comporte des moyens de mise en oeuvre du procédé selon l'invention.

L'invention concerne encore un programme d'ordinateur caractérisé en ce qu'il comporte des instructions de mise en oeuvre du procédé selon l'invention, lorsque ledit programme est exécuté dans un système informatique.

Les avantages de ce dispositif ou de ce programme d'ordinateur sont identiques à ceux mentionnés plus haut en relation avec le procédé selon l'invention.

D'autres caractéristiques et avantages apparaîtront à la lecture d'un mode de réalisation préféré décrit en référence aux figures dans lesquelles:

- la figure 1 est un organigramme représentant les étapes du procédé selon un mode de réalisation de l'invention,
- la figure 2 est la représentation d'un signal numérique dont on cherche à modéliser les composantes sinusoïdales selon l'invention,
- la figure 3 est la représentation de ce signal numérique sur une trame,
- la figure 4 est un tracé permettant de comparer le procédé d'estimation de phase selon l'invention avec d'autres procédé d'estimation de phase de l'art antérieur utilisant uniquement la Transformée de Fourier Discrète comme moyen d'analyse spectrale.

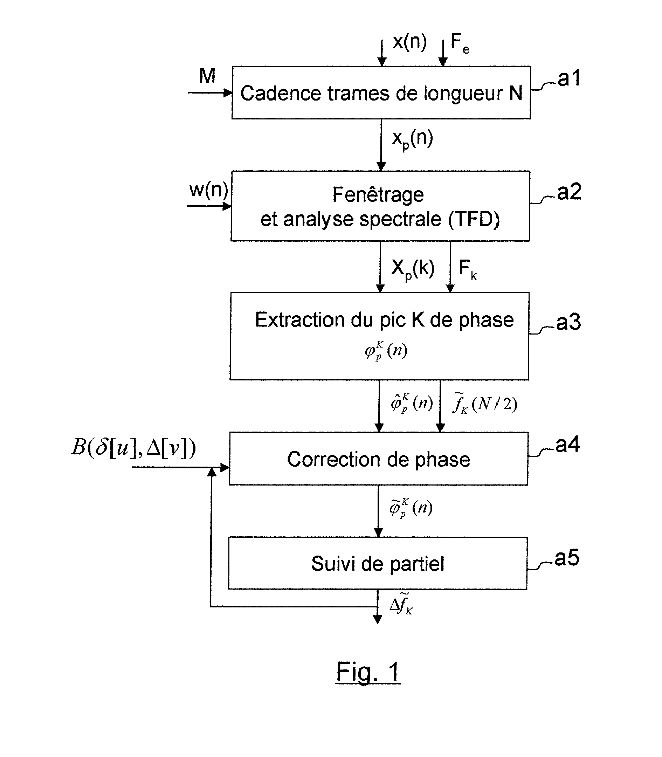

Selon un mode de réalisation de l'invention, le procédé d'estimation de phase selon l'invention est utilisé dans un procédé plus général de modélisation harmonique d'un signal numérique utilisant une analyse en temps et en fréquence à court terme. Le schéma de principe de ce procédé est représenté à la **figure 1**.

Les étapes a1, a2, a3 et a5 correspondent au procédé de modélisation harmonique tel qu'il est habituellement implémenté, l'amélioration de l'estimation de la phase du signal numérique selon l'invention étant implémentée à l'étape a4.

Typiquement le signal numérique analysé est un signal sonore, que l'on modélise par un ensemble d'oscillateurs dont les paramètres d'amplitude et de fréquence varient lentement au cours du temps. Cependant le procédé selon l'invention est applicable à tout signal numérique présentant les mêmes caractéristiques que ce type de signal sonore. Notamment les fréquences des composantes sinusoïdales du signal doivent être suffisamment espacées les unes des autres, afin de permettre son analyse spectrale.

De plus les étapes a1 à a5 sont typiquement implémentées chacune dans un module fonctionnel, à l'intérieur d'un équipement d'analyse de signaux numériques, par exemple un ordinateur. Ces modules fonctionnels utilisent des moyens logiciels ou des moyens matériels électroniques.

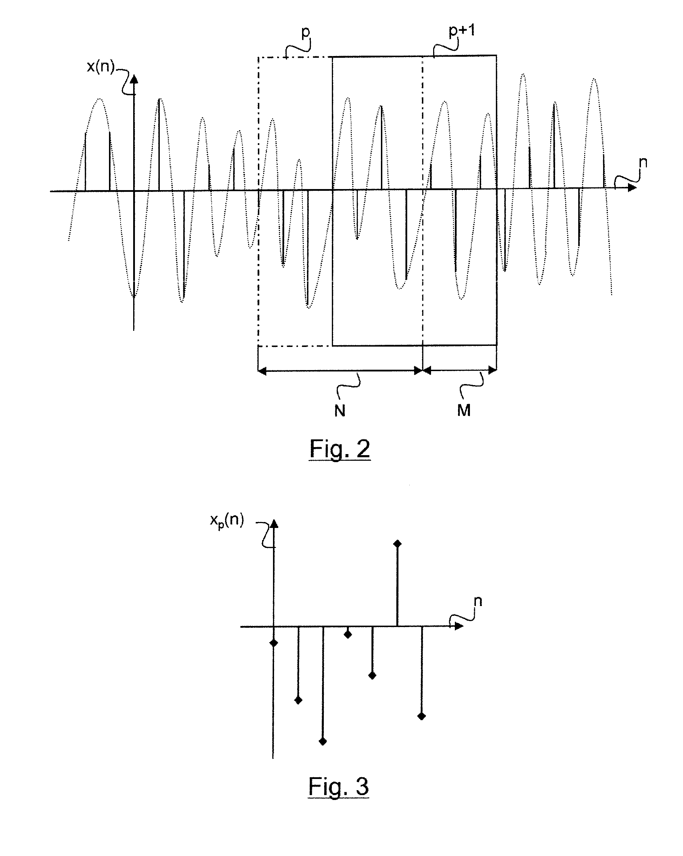

Dans la première étape a1, le signal numérique x(n) à modéliser, de fréquence d'échantillonnage $F_e$, et d'indice d'échantillon n, est découpé en trames de quelques dizaines de millisecondes. Par exemple on travaille sur des trames de 512 échantillons pour un signal échantillonné à 16kHz (kilo Hertz). Comme représenté à la **figure 2**, l'analyse des composantes sinusoïdales du signal numérique se fait sur chacune des trames consécutives du signal x(n), qui se recouvrent en partie car on choisit en général le pas d'avancement M des trames d'une valeur inférieure à la longueur N des trames. Ceci permet d'avoir des estimations des paramètres sinusoïdaux du signal de manière rapprochée au cours du temps. Il est à noter que par un souci de simplification de la **figure 2**, les trames d'indices p et p+1 qui y sont représentées présentent très peu d'échantillons.

On obtient ainsi un signal $x_p(n)$, représenté à la **figure 3**, où p est l'indice de la trame considérée, défini par la formule:

$$x_p(n) = x(n + pM) \quad pour \ \ n \in [0, N-1]$$

où

p est l'indice de la trame considérée,

M est le pas d'avancement des trames,

N est la longueur de chaque trame,

x(n) est la valeur du signal numérique à l'échantillon n,

$x_p(n)$ est la valeur du signal numérique à l'échantillon n de la trame d'indice p.

Les étapes a1 à a5 sont dans cet exemple de réalisation effectuées de manière continue sur le signai x(n), c'est à dire sur les trames successives du signal x(n) pour les étapes a2 à a5.

Dans la deuxième étape a2, on effectue une analyse spectrale du signal à court terme pour chaque trame du signal x(n). Typiquement on applique au signal numérique fenêtre par une fenêtre d'analyse, une Transformée de Fourier Discrète. On obtient alors pour chaque trame d'indice p le spectre $X_p(k)$, k étant un indice fréquentiel variant de 0 à N-1, déterminé par l'équation suivante:

$$X_p(k) = \frac{1}{N} \sum_{n=-\frac{N}{2}+1}^{\frac{N}{2}-1} x_p(n + \frac{N}{2})w(n + \frac{N}{2})\exp(\frac{-j2\pi nk}{N}) \ ,$$

où w(n) est une fenêtre d'analyse qui détermine la résolution fréquentielle de la transformée de Fourier. Cette fenêtre d'analyse est par exemple une fenêtre de type Blackman ou Hann, la seule condition requise sur cette fenêtre de longueur N, c'est-à-dire de même longueur qu'une trame de signal x(n), étant qu'elle soit symétrique en N/2, selon les équations suivantes:

$$w(N/2-n)=w(N/2+n), \ \text{pour n variant de 1 à (N/2 -1)}$$

$$w(0)=0$$

Le choix particulier de cette fenêtre d'analyse et la permutation circulaire d'ordre N/2 effectuée sur le produit de $x_p(n)$ avec w(n), aussi appelée opération de "zero-phasing", avant la Transformée de Fourier Discrète, permet à l'étape a3 d'estimer la phase des pics ou maxima locaux du spectre $X_p(k)$ au milieu de l'intervalle d'analyse, c'est-à-dire à l'échantillon N/2 de la trame d'indice p dans le domaine temporel. L'intervalle d'analyse correspond en effet à la fenêtre d'analyse, il en a donc la même longueur, qui est aussi la taille de la TFD.

Dans la troisième étape a3, les pics, ou maxima locaux du spectre $X_p(k)$, sont extraits. Seuls les pics les plus pertinents sont retenus, un critère étant par exemple de ne garder que les pics les plus énergétiques. A chacun des pics ainsi isolés sont ensuite affectées les valeurs en amplitude, en fréquence et en phase correspondantes.

En général, les fréquences des composantes sinusoïdales du signal à analyser ne coïncident pas avec les fréquences de la TFD utilisée qui, par définition, sont discrètes et liées à la fréquence d'échantillonnage $F_e$ et à la taille N de la TFD par la relation :

$$F_k = k\frac{F_e}{N}$$

où k est l'indice de fréquence du spectre $X_p(k)$ et $F_k$ la fréquence associée en Hertz.

C'est pourquoi, la fréquence de chaque pic est re-estimée après-coup, ce qui permet aussi de re-évaluer l'amplitude du pic en fonction, par exemple, de la fréquence du maximum local associé au pic et de la fréquence re-estimée. De nombreuses méthodes existent pour re-estimer la fréquence du pic, par exemple les méthodes d'interpolation ou de réassignement à partir des raies TFD au voisinage du maximum local. Notamment la méthode du vocodeur de phase, divulguée dans la publication "Phase-locked vocoder" de Miller Puckette en 1995 dans le cadre d'un atelier "Acoustics, Speech and Signal Processing" (ASSP) de l'organisme "Institute of Electrical and Electronic Engineer" (IEEE), donne une bonne estimation de la fréquence sur l'intervalle ou fenêtre d'analyse. Il en est de même avec la méthode de la dérivée, explicitée dans le document de thèse de décembre 2000 de Sylvain Marchand, intitulée "Modélisation informatique du son musical (analyse, transformation, synthèse)", de l'Université Bordeaux 1. Ainsi pour un pic d'indice fréquentiel K dans le spectre $X_p(k)$, on obtient une bonne estimation $\tilde{f}_K(N/2)$ de la fréquence réelle de la composante sinusoïdale correspondante du signal $x_p(n)$, au milieu de l'intervalle d'analyse, c'est-à-dire à l'échantillon N/2 de la trame d'indice p. Dans la suite, on ne s'intéresse pour simplifier qu'à la composante sinusoïdale correspondant au pic d'indice fréquentiel K dans le spectre $X_p(k)$, dont la fréquence estimée est $\tilde{f}_K(N/2)$.

Une estimation de l'amplitude du pic d'indice fréquentiel K est par exemple obtenue par la formule:

$$\tilde{A}_K = \frac{\left|X_p(K)\right|}{\left|W(F_K - \tilde{f}_K(N/2))\right|}$$

où

$\tilde{A}_K$ est l'estimation de l'amplitude du pic d'indice fréquentiel K,

$X_p(K)$ est la valeur de la raie du spectre $X_p(k)$ à l'indice fréquentiel K,

$|z|$ désigne la norme de la variable complexe z,

$W(f)$ est la valeur de la transformée de Fourier de la fenêtre d'analyse w(n) à la variable f de fréquence,

$F_K$ est la fréquence correspondant à l'indice fréquentiel K dans le spectre $X_p(k)$,

et $\tilde{f}_K(N/2)$ est la fréquence estimée à l'échantillon N/2 du pic d'indice fréquentiel K dans le spectre $X_p(k)$.

En ce qui concerne l'estimation de la phase de la composante sinusoïdale de fréquence estimée $\tilde{f}_K(N/2)$, l'opération de "zero-phasing" effectuée à l'étape a2 permet de s'affranchir des rotations de phase dues aux écarts entre la fréquence réelle du pic à extraire et la fréquence de la raie TFD qui lui est associée. Le document de thèse de Sylvain Marchand mentionné plus haut montre que la phase obtenue en prenant l'argument du pic est alors la phase de la composante sinusoïdale correspondante au milieu de l'intervalle d'analyse. On obtient ainsi pour le pic d'indice fréquentiel K, la phase estimée de la composante sinusoïdale correspondante à l'échantillon N/2 de la trame d'indice p, par la formule:

$$\hat{\varphi}_p^K(N/2) = Arg\big(X_p(K)\big)$$

où

$\hat{\varphi}_p^K(N/2)$ est la phase estimée de la composante sinusoïdale considérée à l'échantillon N/2,

et K est l'indice fréquentiel du maximum local correspondant dans le spectre $X_p(k)$.

Cette étape a3 permet également d'obtenir une première estimation $\hat{\varphi}_p^K(n)$ de la phase de la composante sinusoïdale de fréquence estimée $\tilde{f}_K(N/2)$, à l'échantillon n, par la formule de déroulement de phase suivante:

$$\hat{\varphi}_p^K(n) = \hat{\varphi}_p^K(N/2) + 2\pi\left(n - \frac{N}{2}\right)\tilde{f}_K(N/2)T_e,$$

$T_e$ étant la période d'échantillonnage du signal.

Dans la quatrième étape a4, on corrige la première estimation de phase $\hat{\varphi}_p^K(n)$ de la composante sinusoïdale de fréquence estimée $\tilde{f}_K(N/2)$, afin d'obtenir une seconde estimation de phase, qui est une estimation de phase corrigée $\tilde{\varphi}_p^K(n)$ plus proche de la phase réelle $\varphi_p^K(n)$ de cette composante sinusoïdale à l'échantillon n de la trame d'indice p.

En effet, la première estimation de phase $\hat{\varphi}_p^K(n)$ donne de bons résultats pour les signaux stationnaires en fréquence, c'est-à-dire pour les signaux dont les fréquences sont constantes pendant toute la durée de l'intervalle d'analyse. Par exemple si $x_p(n)$ est un signal sinusoïdal pur défini de la manière suivante:

$$x_p(n) = A_0 \cos(\varphi_p^K(n)) \text{ avec } \varphi_p^K(n) = 2\pi f_K n T_e + \varphi_0$$

où $A_0$ et $\varphi_0$ sont l'amplitude et la phase du signal $x_p(n)$ à l'origine, $\varphi_p^K(n)$ est sa phase à l'échantillon n, $f_K$ sa fréquence et $T_e$ la période d'échantillonnage, alors la première estimation de phase $\hat{\varphi}_p^K(n)$ rend la phase réelle $\varphi_p^K(n)$ avec une bonne précision.

En revanche, pour des signaux de fréquences variables pendant la durée de l'intervalle d'analyse, la phase estimée $\hat{\varphi}_p^K(n)$ par la méthode décrite ci-dessus présente un biais. Par exemple si $x_p(n)$ est un signal défini de la manière suivante:

$$x_p(n) = A_0 \cos(\varphi_p^K(n)) \text{ avec } \varphi_p^K(n) = 2\pi(f_K + \frac{\Delta f_K}{2}nT_e)nT_e + \varphi_0$$

où

$A_0$ et $\varphi_0$ sont l'amplitude et la phase du signal $x_p(n)$ à l'origine,

$\varphi_p^K(n)$ est sa phase à l'échantillon n,

$f_K$ sa fréquence,

$T_e$ la période d'échantillonnage,

et $\Delta f_K$ la variation de la fréquence $f_K$ du signal $x_p(n)$ sur la durée de l'intervalle d'analyse, correspondant à une variation de phase du deuxième ordre non négligeable,

alors la première estimation de phase $\hat{\varphi}_p^K(n)$ ne rend pas la phase réelle $\varphi_p^K(n)$ du signal $x_p(n)$ à l'échantillon n de manière satisfaisante. En particulier, lorsqu'on modélise les composantes sinusoïdales d'un signal naturel en utilisant cette première estimation de phase, et qu'on soustrait les composantes ainsi modélisées du signal original, on obtient un bruit résiduel important.

Le procédé d'estimation de phase selon l'invention utilise une approximation du biais entre la phase réelle $\varphi_p^K(n)$ et la première estimation de phase $\hat{\varphi}_p^K(n)$, qui est ainsi définie:

$$B(\delta f, \Delta f_K) = -\arctan\left[\frac{\sum_{n=-\frac{N}{2}+1}^{\frac{N}{2}-1} w(n+\frac{N}{2})\sin\left(2\pi\left(\delta f + \frac{\Delta f_K}{2}nT_e\right)nT_e\right)}{\sum_{n=-\frac{N}{2}+1}^{\frac{N}{2}-1} w(n+\frac{N}{2})\cos\left(2\pi\left(\delta f + \frac{\Delta f_K}{2}nT_e\right)nT_e\right)}\right]$$

$$\text{avec } \delta f = f_K(N/2) - \frac{K}{N}F_e,$$

où

$B(\delta f, \Delta f_K)$ est une approximation du biais entre la phase réelle $\varphi_p^K(n)$ et la première estimation de phase $\hat{\varphi}_p^K(n)$,

$\delta f$ représente l'écart au milieu de la fenêtre d'analyse entre la fréquence réelle de la composante sinusoïdale du signal $x_p(n)$ correspondant au pic fréquentiel d'indice K, et la fréquence discrète correspondante,

$f_K(N/2)$ est la fréquence réelle de la composante sinusoïdale du signal $x_p(n)$ correspondant au pic fréquentiel d'indice K au milieu de la fenêtre d'analyse,

K est l'indice fréquentiel du pic correspondant à la composante sinusoïdale considérée dans le spectre de Fourier du signal $x_p(n)$,

$F_e$ est la fréquence d'échantillonnage du signal,

N est la longueur de la fenêtre d'analyse,

$\Delta f_K$ est la variation de fréquence de la composante sinusoïdale de fréquence $f_K(N/2)$ entre le début et la fin de ladite fenêtre d'analyse,

n est l'indice d'échantillonnage de la trame,

$T_e$ est la période d'échantillonnage du signal,

et w(n) est la valeur de la fenêtre d'analyse à l'échantillon n.

Afin d'obtenir une estimation corrigée $\widetilde{\varphi}_p^K(n)$ de la phase de la composante sinusoïdale de fréquence estimée $\tilde{f}_K(N/2)$ dans la trame d'indice p, lorsque cette phase suit localement une variation quadratique, il faut donc estimer la variation de fréquence de cette composante sur la durée de l'intervalle d'analyse. Cette estimation $\Delta \tilde{f}_K$ est faite par exemple à partir de l'analyse des partiels construits aux étapes a5 pour les trames précédentes, c'est-à-dire lors du liage des paramètres des pics extraits aux étapes a3 correspondantes. Dans ce cas la variation de fréquence est estimée par la différence entre les fréquences estimées de deux pics correspondants de deux trames successives, divisée par l'intervalle de temps qui les sépare. D'autres méthodes plus sophistiquées d'estimation de la variation de fréquence sont utilisables, telles que celles qui sont présentées dans l'article de Aaron S. Master et Yi-Wen Liu pour la conférence 2003 "International Conference on Acoustics, Speech, and Signal Processing " (ICASSP) de l'organisme IEEE, intitulé "Nonstationary Sinusoidal Modeling with Efficient Estimation of Linear Frequency Chirp Parameters".

L'approximation du biais définie plus haut est pré-calculée pour différentes valeurs indicées de différence de fréquence $\delta f$ entre la fréquence d'une composante sinusoïdale d'un signal numérique et la fréquence discrète correspondante dans le spectre de Fourier de ce signal, ainsi que pour différentes valeurs indicées de variation de fréquence estimée entre le début et la fin de la fenêtre d'analyse du signal numérique.

Ces valeurs sont calculées à l'avance et sont donc réutilisables pour toute itération des étapes a1 à a5 sur différents signaux numériques non stationnaires dès lors que la fenêtre d'analyse et la fréquence d'échantillonnage restent inchangées.

Ces valeurs sont organisées dans une grille de valeurs de biais prédéterminées $B(\delta[u],\Delta[v])$ pour la fenêtre d'analyse w(n) et la fréquence d'échantillonnage $F_e$, u et v étant des indices sous forme de nombres entiers. Les valeurs indicées de différences de fréquence $\delta[u]$ sont par exemple régulièrement espacées de 1,56 Hz, et les valeurs indicées de variations de fréquence $\Delta[v]$ sont régulièrement espacées de 1 Hz/s (Hertz/ seconde) sur une plage de variation de fréquence allant de 0 à 8000Hz/s.

Afin d'obtenir une estimation corrigée $\widetilde{\varphi}_p^K(n)$ de la phase de la composante sinusoïdale de fréquence estimée $\tilde{f}_K(N/2)$ dans la trame d'indice p, on effectue à l'étape a4 une interpolation linéaire de valeurs de biais prédéterminées de la grille de valeurs. Pour cela, on calcule la différence de fréquence $\widetilde{\delta f}$ entre la fréquence estimée $\tilde{f}_K(N/2)$ à l'étape a3 au milieu de la fenêtre d'analyse, et la fréquence discrète correspondante, par la formule:

$$\widetilde{\delta f} = \tilde{f}_K(N/2) - \frac{K}{N}F_e \text{ soit } \widetilde{\delta f} = \tilde{f}_K(N/2) - F_K$$

où
$\tilde{\delta} f$ représente l'écart entre la fréquence estimée au milieu de la fenêtre d'analyse de la composante sinusoïdale du signal $x_p(n)$ correspondant au pic fréquentiel d'indice K, et la fréquence discrète correspondante,
$\tilde{f}_K(N/2)$ est la fréquence estimée de la composante sinusoïdale du signal $x_p(n)$ correspondant au pic fréquentiel d'indice K au milieu de la fenêtre d'analyse,
K est l'indice fréquentiel du pic correspondant à la composante sinusoïdale considérée dans le spectre de Fourier du signal $x_p(n)$,
$F_e$ est la fréquence d'échantillonnage du signal,
$F_K$ est la fréquence correspondant à l'indice fréquentiel K dans le spectre $X_p(k)$,
et N est la longueur de la fenêtre d'analyse.

La variation de fréquence estimée $\Delta \tilde{f}_K$ entre le début et la fin de la fenêtre d'analyse ayant été précédemment obtenue, on cherche les indices u et v de la grille de valeurs prédéterminées tels que:

$$\delta f[u] \le \widetilde{\delta f} \le \delta f[u+1] \text{ et } \Delta f[v] \le \widetilde{\Delta f}_K \le \Delta f[v+1]$$

On estime ensuite le biais entre la première estimation de phase de l'étape a3, et la phase réelle de la composante sinusoïdale considérée du signal $x_p(n)$ au milieu de la fenêtre d'analyse, par interpolation linéaire, suivant les équations suivantes:

$$\widetilde{B} = B' + (B'' - B')\frac{\widetilde{\Delta f}_K - \Delta f[v]}{\Delta f[v+1] - \Delta f[v]}$$

avec

$$B' = B(\delta f[u], \Delta f[v]) + \big(B(\delta f[u+1], \Delta f[v]) - B(\delta f[u], \Delta f[v])\big)\frac{\widetilde{\delta f} - \delta f[u]}{\delta f[u+1] - \delta f[u]}$$

et

$$B'' = B(\delta f[u], \Delta f[v+1]) + \big(B(\delta f[u+1], \Delta f[v+1]) - B(\delta f[u], \Delta f[v+1])\big)\frac{\widetilde{\delta f} - \delta f[u]}{\delta f[u+1] - \delta f[u]}$$

Il est à noter que dans ce mode de réalisation on effectue une interpolation linéaire de quatre valeurs de la grille de valeurs prédéterminées, mais il est également envisageable de n'utiliser qu'une valeur de la grille de valeurs, ou plus. De plus d'autres types d'interpolation sont utilisables, comme par exemple une interpolation polynômiale.

En outre, dans ce mode de réalisation de l'invention, on estime le biais entre la première estimation de phase et la phase réelle de la composante sinusoïdale à l'aide d'une grille de valeurs de l'expression en arctangente donnée précédemment. Cependant d'autres estimations du biais sont possibles. Par exemple, en variante de réalisation, pour de faibles valeurs d'écarts de fréquences entre la fréquence estimée $\widetilde{f}_K$ ($N/2$) et la fréquence discrète $F_K$ correspondante, et pour de faibles valeurs de variation de fréquence estimée $\Delta\widetilde{f}_K$, on utilise un développement limité de cette expression en arctangente:

$$\widetilde{B} = -\pi T_e\frac{\big(2W_1\widetilde{\delta f} + T_e W_2\widetilde{\Delta f}_K\big)}{W_0},$$

où $W_i$, i étant un indice variant de 0 à 2, est le moment d'ordre i de la fenêtre d'analyse, défini par la formule:

$$W_i = \sum_{n=-\frac{N}{2}+1}^{\frac{N}{2}-1} w(n+\frac{N}{2})n^i\,,$$

w(n) étant la valeur de la fenêtre d'analyse à l'échantillon n.

Une fois le biais estimé, l'estimation de phase corrigée en N/2 à l'étape a4 est donnée par la formule:

$$\widetilde{\varphi}_p^K(N/2) = \hat{\varphi}_p^K(N/2) + \widetilde{B}\,,$$

où
N/2 est l'indice de l'échantillon au milieu de la trame d'indice p,

$\widetilde{\varphi}_p^K (N/2)$ est la première estimation de phase en N/2 corrigée par le procédé d'estimation de phase selon l'invention,

$\hat{\varphi}_p^K (N/2)$ est la première estimation de phase en N/2 obtenue à l'étape a3,

et $\bar{B}$ est l'estimation du biais obtenue ci-dessus, entre la phase réelle de la composante sinusoïdale du signal $x_p(n)$ au milieu de la fenêtre d'analyse et la première estimation de phase de cette composante au milieu de la fenêtre d'analyse.

L'estimation de phase corrigée $\widetilde{\varphi}_p^K (n)$ à un échantillon n quelconque de la fenêtre d'analyse est également donnée par la formule:

$$\widetilde{\varphi}_p^K (n) = \hat{\varphi}_p^K (n) + \widetilde{B} ,$$

où

$\widetilde{\varphi}_p^K (n)$ est l'estimation de phase corrigée par le procédé selon l'invention à l'échantillon n,

$\hat{\varphi}_p^K (n)$ est la première estimation de phase obtenue à l'étape a3 pour l'échantillon n,

et $\bar{B}$ est l'estimation du biais obtenue ci-dessus.

Il est à noter que la formule précédente s'obtient par simple déroulement de phase:

$$\widetilde{\varphi}_p^K (n) = \widetilde{\varphi}_p^K (N/2) + 2\pi(\widetilde{f}_K (N/2) + \frac{\widetilde{\Delta f}_K}{2}(n - N/2)T_e)(n - N/2)T_e$$

$$\Leftrightarrow \widetilde{\varphi}_p^K (n) = \hat{\varphi}_p^K (N/2) + \widetilde{B} + 2\pi(\widetilde{f}_K (N/2) + \frac{\widetilde{\Delta f}_K}{2}(n - N/2)T_e)(n - N/2)T_e$$

$$\Leftrightarrow \widetilde{\varphi}_p^K (n) = \hat{\varphi}_p^K (N/2) + 2\pi(\widetilde{f}_K (N/2) + \frac{\widetilde{\Delta f}_K}{2}(n - N/2)T_e)(n - N/2)T_e + \widetilde{B}$$

$$\Leftrightarrow \widetilde{\varphi}_p^K (n) = \hat{\varphi}_p^K (n) + \widetilde{B}$$

où
$\widetilde{f}_K(N/2)$ est la fréquence estimée de la composante sinusoïdale du signal $x_p(n)$ correspondant au pic fréquentiel d'indice K au milieu de la fenêtre d'analyse,
$\Delta \widetilde{f}_K$ est la variation de fréquence estimée entre le début et la fin de la fenêtre d'analyse,
et $T_e$ est la période d'échantillonnage.

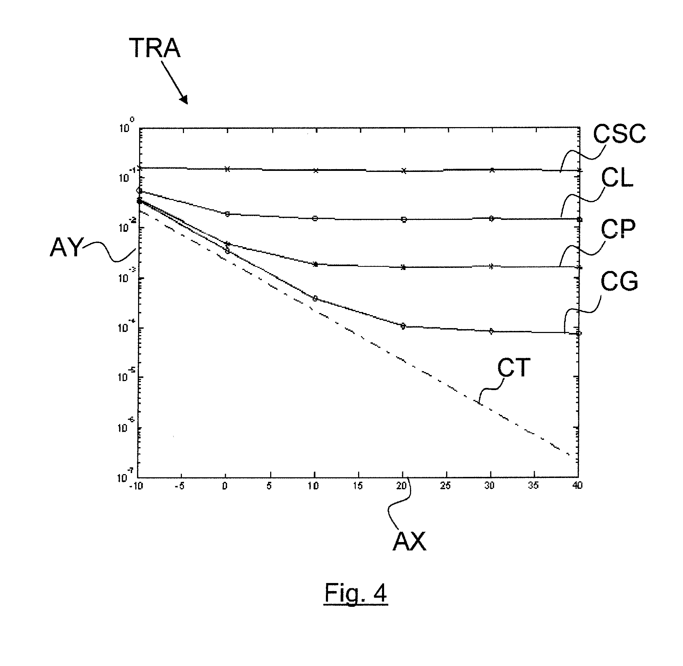

Les résultats obtenus par le procédé d'estimation de phase selon l'invention sont illustrés dans le tracé TRA de la **figure 4**. Ce tracé permet de comparer les performances du procédé selon la présente invention avec les résultats obtenus sans correction de phase ou en utilisant des techniques de correction de phase antérieures décrites dans la demande de brevet FR0553891 et qui n'utilisent pour l'analyse spectrale que la Transformée de Fourier Discrète.

Les tests pour effectuer ce tracé ont été réalisés à partir d'un grand nombre d'estimations de phase pour différentes fréquences d'un signal synthétique sinusoïdal échantillonné à 16000Hz, auquel on a ajouté un bruit blanc gaussien centré pour obtenir un rapport signal à bruit variant de -10 à 40 dB (décibels). La plage de variations en fréquence utilisée va de 0 à 8000Hz/s.

Les erreurs ainsi obtenues entre les estimations de phase éventuellement corrigées et les phases théoriques correspondantes du signal ont été moyennées sur les différents tests correspondant chacun à une estimation de phase sur un signal bruité de fréquence différente pour une valeur de rapport signal à bruit donnée.

Une grille de valeurs prédéterminées de biais a été remplie préalablement à ces tests. Pour cela, des valeurs

de biais $B(\delta[u],\Delta[v])$ ont été calculées suivant le procédé selon l'invention pour différentes valeurs indicées $\delta[u]$ de différences de fréquence et $\Delta[v]$ de variations de fréquences, celles-ci variant de 0 à 8000Hz/s. La résolution utilisée est:

$$\delta f[u+1] - \delta f[u] = 1,56 Hz$$

$$\Delta f[v+1] - \Delta f[v] = 1,0 Hz/s$$

Pour chaque test, correspondant à une fréquence de signal donnée, à une variation de fréquence donnée et à un rapport signal à bruit donné, on a tout d'abord réalisé les étapes suivantes:

- on a découpé le signal bruité en trames de longueur N égale à 512 avec un pas d'avancement M égal à 128,
- on a effectué ensuite une TFD du signal bruité fenêtré par une fenêtre de Hann, soit w(n), et sur lequel on a effectué une opération de "zero-phasing",
- on a effectué ensuite trois estimations de fréquence pour trois trames consécutives par une méthode telle que celle du vocodeur de phase, au milieu de chacune des trois trames analysées, ce qui a permis d'obtenir une estimation $\widetilde{\Delta f}_K$ la variation de fréquence du signal bruité, et une estimation $\widetilde{f}_K(N/2)$ de la fréquence sur la deuxième trame en son milieu,
- on a utilisé ensuite la TFD de la deuxième trame, afin d'obtenir une première estimation de phase au milieu de cette trame en prenant l'argument du pic d'énergie maximale de cette TFD,
- on a calculé l'erreur entre cette première estimation de phase et la phase théorique du signal non bruité au milieu de cette deuxième trame, c'est-à-dire la valeur:

$$\left| \hat{\varphi}_p^K(N/2) - \varphi_p^K(N/2) \right|$$

où

$\hat{\varphi}_p^K(N/2)$ est la première estimation de phase du signal bruité au milieu de la deuxième trame, et

$\varphi_p^K(N/2)$ est la valeur théorique de la phase du signal non bruité au milieu de la deuxième trame.

L'erreur ainsi calculée a permis d'établir la courbe CSC d'erreurs quadratiques moyennes d'estimations de phase en fonction du rapport signal à bruit lorsqu'on n'utilise aucune technique de correction de la première estimation de phase. Consécutivement à ces premières étapes, on a ensuite appliqué, pour chaque test, différentes techniques de correction de la première estimation de phase:

- on a corrigé la phase estimée précédemment suivant une première variante du procédé de correction de phase décrit dans la demande FR0553891, par la formule:

$$\widetilde{\varphi}_p^K(N/2) = \hat{\varphi}_p^K(N/2) - \pi\widetilde{\Delta f}_K T_e^2 \left( \frac{(W_2 - NW_1)}{W_0} + \frac{N^2}{4} \right),$$

où
N est la longueur de la fenêtre d'analyse,
$T_e$ est la période d'échantillonnage,
$\Delta \widetilde{f}_K$ est la variation de fréquence précédemment estimée du signal bruité,

$\hat{\varphi}_p^K(N/2)$ est la première estimation phase du signal bruité sur la deuxième trame en son milieu,

$\widetilde{\varphi}_p^K(N/2)$ est la phase estimée corrigée du signal sur la deuxième trame en son milieu,

et $W_i$, i étant un indice variant de 0 à 2, est le moment d'ordre i de la fenêtre d'analyse, défini par la formule:

$$W_i = \sum_{n=0}^{N-1} w(n) n^i$$

où:

w(n) est la valeur de la fenêtre d'analyse à l'échantillon n.

- et on a calculé l'erreur entre la phase estimée corrigée précédemment et la phase théorique du signal non bruité au milieu de la deuxième trame, c'est-à-dire la valeur:

$$\left| \widetilde{\varphi}_p^K (N/2) - \varphi_p^K (N/2) \right|$$

L'erreur ainsi calculée a permis d'établir la courbe CL d'erreurs quadratiques moyennes d'estimations de phase corrigées suivant la première variante du procédé de correction de phase de la demande FR0553891, en fonction du rapport signal à bruit.
- On a ensuite corrigé la première estimation de phase suivant une seconde variante du procédé de correction de phase décrit dans la demande FR0553891, par la formule:

$$\widetilde{\varphi}_p^K (N/2) = \hat{\varphi}_p^K (N/2) - \sum_{i=0}^{d} \alpha_i \Delta\widetilde{f}_K^{\,i} - \pi\Delta\widetilde{f}_K T_e^{\,2} \frac{N^2}{4}$$

avec

$$d = 4$$

$$\alpha_0 = 9{,}3599.10^{-4}$$

$$\alpha_1 = 1{,}0145.10^{-4}$$

$$\alpha_2 = 1{,}9666.10^{-9}$$

$$\alpha_3 = -1{,}0262.10^{-12}$$

$$\alpha_4 = 4{,}4716.10^{-17} ,$$

où
N est la longueur de la fenêtre d'analyse,
$T_e$ est la période d'échantillonnage,

$\Delta \widetilde{f}_k$ est la variation de fréquence précédemment estimée du signal bruité,

$\hat{\varphi}_p^K(N/2)$ est la première estimation phase du signal bruité sur la deuxième trame en son milieu,

et $\widetilde{\varphi}_p^K(N/2)$ est la phase estimée corrigée du signal sur la deuxième trame en son milieu suivant cette deuxième variante du procédé de correction décrit dans la demande FR0553891,

- et on a calculé l'erreur entre cette nouvelle phase estimée corrigée $\widetilde{\varphi}_p^K(N/2)$ et la phase théorique du signal non bruité au milieu de la deuxième trame, c'est-à-dire la valeur:

$$\left| \widetilde{\varphi}_p^K(N/2) - \varphi_p^K(N/2) \right|$$

L'erreur ainsi calculée a permis d'établir la courbe CP d'erreurs quadratiques moyennes d'estimations de phase corrigées suivant la deuxième variante du procédé de correction de phase de la demande FR0553891, en fonction du rapport signal à bruit.
- Enfin on a corrigé la première estimation de phase suivant le mode de réalisation du procédé selon l'invention par la formule:

$$\widetilde{\varphi}_p^K(N/2) = \hat{\varphi}_p^K(N/2) + \widetilde{B}$$

$$\text{avec } \widetilde{B} = B' + (B'' - B') \frac{\widetilde{\Delta f}_K - \Delta f[v]}{\Delta f[v+1] - \Delta f[v]},$$

$$B' = B(\delta f[u], \Delta f[v]) + \left( B(\delta f[u+1], \Delta f[v]) - B(\delta f[u], \Delta f[v]) \right) \frac{\widetilde{\delta f} - \delta f[u]}{\delta f[u+1] - \delta f[u]}$$

et

$$B'' = B(\delta f[u], \Delta f[v+1]) + \left( B(\delta f[u+1], \Delta f[v+1]) - B(\delta f[u], \Delta f[v+1]) \right) \frac{\widetilde{\delta f} - \delta f[u]}{\delta f[u+1] - \delta f[u]},$$

u et v étant les indices des valeurs de biais $B(\delta[u], \Delta[v])$ de la grille de valeurs prédéterminées, tels que:

$$\delta f[u] \le \widetilde{\delta f} \le \delta f[u+1] \text{ et } \Delta f[v] \le \widetilde{\Delta f}_K \le \Delta f[v+1]$$

avec

$$\widetilde{\delta f} = \widetilde{f}_K(N/2) - \frac{K}{N} F_e$$

où
$\delta f$ est l'écart entre la fréquence précédemment estimée du signal bruité et la fréquence discrète correspondante dans le spectre de la TFD du signal,

$\Delta \tilde{f}_K$ est la variation de fréquence précédemment estimée du signal bruité,

$\hat{\varphi}_p^K(N/2)$ est la première estimation phase du signal bruité sur la deuxième trame en son milieu,

et $\tilde{\varphi}_p^K(N/2)$ est la phase estimée corrigée du signal sur la deuxième trame en son milieu suivant le mode de réalisation du procédé selon l'invention,

- et on a calculé l'erreur entre cette nouvelle phase estimée corrigée $\tilde{\varphi}_p^K(N/2)$ et la phase théorique du signal non bruité au milieu de la deuxième trame, c'est-à-dire la valeur:

$$\left| \tilde{\varphi}_p^K(N/2) - \varphi_p^K(N/2) \right|$$

L'erreur ainsi calculée a permis d'établir la courbe CG d'erreurs quadratiques moyennes d'estimations de phase corrigées suivant le procédé d'estimation de phase selon l'invention, en fonction du rapport signal à bruit.

L'erreur moyenne de l'estimation de phase corrigée par rapport à l'estimation de phase théorique en utilisant le mode de réalisation du procédé selon l'invention est représentée par la courbe CG du tracé TRA, pour un rapport signal à bruit variant de -10dB à 40dB sur l'axe AX, gradué de 5dB en 5dB. L'axe AY d'erreur quadratique moyenne est gradué sur une échelle logarithmique en rad$^2$ de la valeur $10^{-7}$ à la valeur $10^{0.}$

Le tracé TRA fait apparaître que les résultats obtenus avec le procédé selon l'invention, suivant la courbe CG, sont plus précis que ceux obtenus par les procédés de l'art antérieur, qui utilisent comme moyen d'analyse spectrale uniquement la Transformée de Fourier Discrète, et qui sont représentés par les courbes CSC, CL et CP. De plus, le tracé TRA montre que les résultats obtenus avec le procédé selon l'invention se rapprochent de la limite théorique de Cramer-Rao, représentée par la courbe CT. Cette limite théorique est une limite inférieure indépassable de la variance obtenue par des mesures indirectes, utilisée pour tester des estimateurs. Une définition plus précise de cette limite théorique est donnée dans l'article "Parameter Estimation of Chirp Signals" de P.M. Djuric et S.M. Kay, publié dans le numéro de Décembre 1990 du magazine "IEEE Transactions on Acoustics, Speech, and Signal Processing".

## Revendications

1. Procédé d'estimation de phase d'une composante sinusoïdale d'un signal audionumérique (x(n)) non stationnaire, comportant les étapes de:

   - segmentation (a1) dudit signal en trames temporelles,
   - Transformée de Fourier Discrète (a2) d'une desdites trames, pondérée par une fenêtre d'analyse (w(n)) afin d'obtenir une valeur d'un pic du spectre en fréquence dudit signal correspondant à ladite composante sinusoïdale,
   - estimation de fréquence (a3) sur ladite trame de ladite composante sinusoïdale,

   - première estimation de phase (a3, $\hat{\varphi}_p^K(n)$) de ladite composante sinusoïdale en utilisant l'argument de ladite valeur de pic ainsi obtenue,

   **caractérisé en ce qu'**il comprend les étapes supplémentaires de:

   - estimation (a4) d'une valeur de biais en fonction de la différence de fréquence entre la fréquence précédemment obtenue à l'étape d'estimation et la fréquence discrète dudit pic, et en fonction d'une variation de fréquence estimée de ladite composante sinusoïdale ($\Delta \tilde{f}_K$) entre le début et la fin de ladite fenêtre d'analyse (w(n)),
   - correction (a4) de ladite première estimation de phase par ladite valeur de biais.

2. Procédé d'estimation de phase d'une composante sinusoïdale d'un signal audionumérique (x(n)) non stationnaire selon la revendication 1, **caractérisé en ce que** l'étape d'estimation d'une valeur de biais utilise une grille de valeurs prédéterminées($B(\delta[u],\Delta[v])$) comprenant, pour des valeurs de différences de fréquences et de variations de fréquence prédéterminées, des valeurs de biais

$$B(\delta[u],\Delta[v]) = -\arctan\left[\frac{\sum\limits_{n=-\frac{N}{2}+1}^{\frac{N}{2}-1} w(n+\frac{N}{2})\sin\left(2\pi\left(\delta[u]+\frac{\Delta[v]}{2}nT_e\right)nT_e\right)}{\sum\limits_{n=-\frac{N}{2}+1}^{\frac{N}{2}-1} w(n+\frac{N}{2})\cos\left(2\pi\left(\delta[u]+\frac{\Delta[v]}{2}nT_e\right)nT_e\right)}\right]$$

où
$B(\delta[u],\Delta[v])$ est une valeur de biais de la grille de valeurs prédéterminées,
$\delta[u]$ est une valeur de différence de fréquences prédéterminée,
$\Delta[v]$ est une valeur de variation de fréquence prédéterminée,
n est l'indice d'échantillonnage de la trame,
N est la longueur de la trame,
$T_e$ est la période d'échantillonnage du signal,
et w(n) est la valeur de la fenêtre d'analyse à l'échantillon n.

3. Procédé d'estimation de phase d'une composante sinusoïdale d'un signal audionumérique (x(n)) non stationnaire selon la revendication 2, **caractérisé en ce que** dans l'étape d'estimation (a4) d'une valeur de biais, ladite valeur de biais est obtenue par interpolation de valeurs prédéterminées de ladite grille.

4. Procédé de modélisation harmonique d'un signal audionumérique (x(n)) non stationnaire, utilisant le procédé d'estimation de phase selon l'une quelconque des revendications 1 à 3.

5. Dispositif d'estimation de phase d'une composante sinusoïdale d'un signal audionumérique (x(n)) non stationnaire, **caractérisé en ce qu'**il comporte des moyens de mise en oeuvre du procédé selon l'une quelconque des revendications 1 à 3.

6. Programme d'ordinateur **caractérisé en ce qu'**il comporte des instructions de mise en oeuvre du procédé selon l'une quelconque des revendications 1 3, lorsque ledit programme est exécuté dans un système informatique.

Fig. 1

Fig. 2

Fig. 3

Fig. 4

**Office européen**
**des brevets**

**RAPPORT DE RECHERCHE EUROPEENNE**

Numéro de la demande

EP 07 11 4992

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| A | BETSER M ET AL: "Accurate phase estimation for chirp-like signals" 120TH AES CONVENTION, 20-23 MAY 2006, PARIS, FRANCE, 20 mai 2006 (2006-05-20), pages 1764-1771, XP008067186 * le document en entier * ----- | 1-6 | INV. G06F17/14 G10L19/02 |
| A | LAGRANGE M: "Modélisation sinusoïdale des sons polyphoniques" 16 décembre 2004 (2004-12-16), THÈSE DE DOCTORAT, ÉCOLE DOCTORALE DE MATHÉMATIQUES ET D'INFORMATIQUE, UNIVERSITÉ DE BORDEAUX 1 , XP002395445 Extrait de l'Internet: URL:http://dept-info.labri.fr/~lagrange/ph d/lagrangePhd.pdf> [extrait le 2006-08-17] * section 2.1.5 ; en particulier équations (2.31) et (2.34) * * section 2.4.3 ; en particulier équation (2.66) et tables 2.3 et 2.4 * ----- | 1-6 | |
| A | ABE M ET AL: "AM/FM rate estimation for time-varying sinusoidal modeling" PROCEEDINGS OF THE 2005 IEEE INTERNATIONAL CONFERENCE ON ACOUSTICS, SPEECH, AND SIGNAL PROCESSING (ICASSP'05), 18-23 MARCH 2005, PHILADELPHIA, PENNSYLVANIA, USA, 18 mars 2005 (2005-03-18), pages 201-204, XP010792364 IEEE, USA ISBN: 0-7803-8874-7 * abrégé * * section 1 - section 4 ; table 1 * ----- -/-- | 1-6 | DOMAINES TECHNIQUES RECHERCHES (IPC) G06F G10L |

Le présent rapport a été établi pour toutes les revendications

| Lieu de la recherche | Date d'achèvement de la recherche | Examinateur |
|---|---|---|
| Berlin | 21 décembre 2007 | DOMINGO VECCHIONI, M |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

...............................................................
& : membre de la même famille, document correspondant

EPO FORM 1503 03.82 (P04C02)

# EP 1 895 433 A1

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| A | PEETERS G ET AL: "SINOLA: A new analysis/synthesis using spectrum peak shape distortion, phase and reassigned spectrum"<br>PROCEEDINGS OF THE 1999 INTERNATIONAL COMPUTER MUSIC CONFERENCE (ICMC'99), OCTOBER 1999, BEIJING, CHINA, octobre 1999 (1999-10), XP002395442<br>Extrait de l'Internet:<br>URL:http://mediatheque.ircam.fr/articles/textes/Peeters99b/> [extrait le 2006-08-17]<br>* section 2, introduction *<br>* section 2.3, introduction *<br>* section 2.3.1, troisième point *<br>-----<br> | 1-6 | |
| A | PEETERS G: "Modèles et modification du signal sonore adaptés à ses caractéristiques locales"<br>11 juillet 2001 (2001-07-11), THÈSE DE DOCTORAT, UNIVERSITÉ DE PARIS 6 , XP002395446<br>Extrait de l'Internet:<br>URL:http://recherche.ircam.fr/equipes/analyse-synthese/peeters/THESE/PS/Peeters_Thesev1.1.pdf><br>[extrait le 2006-08-17]<br>* page 91 - page 97 ; équation (4.46) *<br>-----<br> | 1-6 | **DOMAINES TECHNIQUES RECHERCHES (IPC)** |

Le présent rapport a été établi pour toutes les revendications

| Lieu de la recherche | Date d'achèvement de la recherche | Examinateur |
|---|---|---|
| Berlin | 21 décembre 2007 | DOMINGO VECCHIONI, M |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
..............................................................................
& : membre de la même famille, document correspondant

EPO FORM 1503 03.82 (P04C02)

## RÉFÉRENCES CITÉES DANS LA DESCRIPTION

### Documents brevets cités dans la description

- FR 0553891

### Littérature non-brevet citée dans la description

- Phase-locked vocoder. **MILLER PUCKETTE.** Acoustics, Speech and Signal Processing. IEEE, 1995
- International Conference on Acoustics, Speech, and Signal Processing. **AARON S. MASTER ; YI-WEN LIU.** Nonstationary Sinusoidal Modeling with Efficient Estimation of Linear Frequency Chirp Parameters. IEEE, 2003
- Parameter Estimation of Chirp Signals. **P.M. DJURIC ; S.M. KAY.** IEEE Transactions on Acoustics, Speech, and Signal Processing. Décembre 1990